# FASCICULE DE BREVET EUROPEEN

(11) **EP 3 728 004 B1**
(45) Date de publication et mention de la délivrance du brevet: **05.01.2022**
(21) Numéro de dépôt: 18803930.9
(22) Date de dépôt: 13.11.2018
(51) Int. Cl.: B62D 43/00, B62D 29/00, B62D 25/20, B62D 27/02

(54) **PIÈCE MOULÉE POLYMÈRE POUR ASSEMBLAGE SUR UNE ARMATURE MÉTALLIQUE, ET PROCÉDÉ DE FABRICATION ASSOCIÉ, D'UNE STRUCTURE DE CAISSE DE VÉHICULE AUTOMOBILE**
POLYMERFORMTEIL ZUR MONTAGE AN EINEM METALLGERÜST UND VERFAHREN ZUR HERSTELLUNG EINER KRAFTFAHRZEUGKAROSSERIESTRUKTUR
MOULDED POLYMER PART FOR ASSEMBLING TO A METAL FRAMEWORK, AND ASSOCIATED METHOD FOR MANUFACTURING A MOTOR VEHICLE BODYWORK STRUCTURE

(30) Priorité: 21.12.2017 FR 1762699
(43) Date de publication de la demande: 28.10.2020
(73) Titulaire: Renault S.A.S., 92100 Boulogne-Billancourt (FR)
(72) Inventeur: GLAUMOT, Olivier, 91470 Forges les Bains (FR); MARHIC, Delphine, 78460 CHEVREUSE (FR); JAUNASSE, Philippe, 75015 PARIS (FR)
(86) Numéro de dépôt international: PCT/EP2018/081012
(87) Numéro de publication internationale: WO 2019/120755

(56) Documents cités:
- EP-A1- 0 718 068
- EP-A1- 2 961 647
- EP-A2- 0 967 044
- EP-A2- 2 708 415
- FR-A1- 2 950 851

## Description

L'invention a pour objet l'intégration à une structure de caisse automobile, de pièces surfaciques ou de pièces coques, présentant par exemple une géométrie de type "forme emboutie en tôle ".

De telles pièces peuvent former des coques structurelles, des planchers ou des bacs de stockage, et peuvent typiquement s'étendre transversalement à une structure de caisse automobile, par exemple pour former un bac de logement de roue de secours.

Dans un souci d'allégement des véhicules, on cherche à remplacer des pièces, conçues initialement comme des pièces en tôle emboutie, par des pièces réalisées en matériau polymère.

Il faut alors choisir un mode d'assemblage compatible à la fois avec la pièce polymère et avec la structure métallique environnante.

L'ensemble assemblé, juxtaposant polymère et métal, doit parfois pouvoir supporter un passage à haute température. Ce cycle de température peut être imposé à l'ensemble de la structure de caisse, afin de cuire les traitements protecteurs contre la corrosion, par exemple des traitements de type cataphorèse. L'organisation de l'atelier peinture peut amener à effectuer de tels traitements une fois la pièce polymère assemblée sur la structure. Dans certains cas, l'assemblage doit être apte à subir des traitements thermochimiques à des températures supérieures à 100° et fréquemment supérieures à 150°C. Le document FR 2 950 851 A1 divulgue les caractéristiques du préambule de la revendication 1.

L'invention a pour but de proposer une conception de pièce polymère, et une méthode d'assemblage de cette pièce, qui permettent d'assembler une pièce polymère à une structure de caisse métallique. On souhaite pouvoir assembler y compris des pièces polymères de grandes dimensions.

A cette fin, il est proposé de réaliser une pièce moulée en matière polymère, la pièce comportant au moins une portion de zone plane d'assemblage destinée à être solidarisée avec une structure support, par exemple à une structure métallique. La pièce peut être par exemple réalisée par moulage, notamment par injection, de matière polymère.

Il est ainsi proposé un sous ensemble de structure de caisse automobile, comprenant:
- une portion métallique de structure de caisse formant cadre, de préférence formant un cadre métallique de contour sensiblement horizontal,
- une pièce moulée définissant une surface porteuse de type bac ou plancher, configurée pour être assemblée sur le cadre de manière à être entourée par le cadre, la pièce moulée comprenant :
- une surface centrale porteuse,
- un contour d'appui sensiblement plan entourant la surface centrale porteuse, de niveau avec la surface centrale porteuse ou au dessus de la surface centrale porteuse.

Le contour d'appui de la pièce moulée, est traversé par une suite d'orifices d'assemblage, les orifices d'assemblage traversant le contour d'appui dans son épaisseur, les orifices d'assemblage étant de forme oblongue dans le plan du contour d'assemblage, et étant dimensionnés de manière qu'une portion centrale de chaque orifice est de largeur suffisante pour assembler entre elles par soudage, deux tôles du cadre, superposées entre elles et superposées au contour d'appui.

Selon un mode de réalisation, les deux tôles du cadre peuvent être situées chacune sur une face différente de l'orifice, et se toucher au travers de l'orifice.Selon un autre mode de réalisation, les deux tôles du cadre sont situées du même côté de la pièce moulée, de préférence sous une face inférieure de la pièce moulée. Des éléments de maintien métalliques peuvent alors être soudés avec les deux tôles de cadre au travers des orifices, de manière à fixer la pièce sur les deux tôles de cadre tout en autorisant un déplacement, dans le plan du contour d'appui, d'au moins un des orifices par rapport à son élément de maintien métallique.

Par contour d'appui plan, on entend que les différentes portions du contour d'appui se trouvent chacune dans un plan parallèle à un même plan géométrique commun, par exemple à un plan horizontal.

Les deux tôles du cadre peuvent présenter un relief local de manière à se toucher avant la réalisation du point de soudure. On peut également envisager des modes de réalisation dans lesquels les deux tôles ne se touchent qu'une fois le soudage, ou une fois un assemblage par un autre mode -poinçonnage, rivetage...-, effectué.

Chacun desdits orifices peut présenter une largeur maximale correspondant à un plus petit diamètre de l'orifice, largeur maximale orientée suivant une premier axe de l'orifice. Chacun desdits orifices peut présenter une longueur maximale correspondant à un plus grand diamètre de l'orifice, orientée selon une direction perpendiculaire au premier axe.

Les plus petits diamètres de plusieurs orifices peuvent être sensiblement égaux entre eux.

Par diamètre de l'orifice on entend une largeur entre deux bords de l'orifice mesurée le long d'une droite passant par un point sensiblement central de l'orifice.

Par sensiblement de même plus petit diamètre, on entend que le plus petit diamètre des orifices présente des variations de moins de 20%, de préférence de moins de 10%, par rapport au plus petit diamètre du trou le plus large.

Selon un autre mode de réalisation, le plus petit diamètre des orifices peut être sensiblement constant, égale à une première largeur, le long de deux bords opposés du cadre, et le plus petit diamètre peut être sensiblement constant, égal à une deuxième largeur strictement supérieure à la première largeur, le long d'un troisième bord du cadre joignant les deux bords opposés du cadre.

Cette configuration peut être particulièrement avantageuse si le troisième bord du cadre fait face à un quatrième côté du cadre, sur lequel est assemblé une portion verticale de la pièce moulée.

La suite d'orifices peut présenter un plus grand diamètre, qui varie de manière monotone d'un orifice à l'orifice suivant, sur au moins trois orifices successifs du contour d'appui, avantageusement, sur au moins quatre orifices successifs du contour d'appui.

Une telle variation permet d'offrir, lors de dilatations différentielles entre la pièce et le cadre, un degré de liberté de déplacement de la pièce moulée par rapport au cadre, qui dépend du lieu de la pièce. Ce degré de liberté peut par exemple varier en fonction de la distance à un ou plusieurs points de référence de la pièce, considérés comme immobiles. Ces points de références peuvent par exemple se situer au niveau du cadre métallique soutenant la pièce. Ces points de références peuvent, dans d'autres modes de réalisation, correspondre à un point central de la pièce moulée.

Selon un mode de réalisation, les orifices peuvent présenter une section rectangulaire ou ovale, dont les grands axes sont sensiblement parallèles à un bord libre du contour d'appui, le plus proche de l'orifice.

On appelle ici bord libre du contour d'appui, un bord qui est libre avant l'assemblage de la pièce moulée.

La longueur des orifices peut alors par exemple croitre entre des orifices destinés à être assemblés dans des coins du cadre métallique, et des orifices destinés à être assemblés plus près du milieu d'un des bords du cadre rejoignant le coin.

Les orifices se trouvant le plus près des coins du cadre peuvent par exemple présenter des grands axes orientés à 45° par rapport à la direction du bord du cadre.

Selon un autre mode de réalisation, les orifices situés le plus près d'un coin du cadre peuvent être circulaires. Selon un mode de réalisation, ils peuvent être circulaires et avoir pour diamètre la plus petite largeur commune aux autres orifices allongés.

Selon un autre mode de réalisation, les orifices situés le plus près d'un coin du cadre peuvent être circulaires de diamètre supérieur à la plus petite largeur commune aux autres orifices allongés

Les orifices peuvent présenter une section rectangulaire ou ovale, dont les grands axes sont orientés de manière sensiblement radiale à partir d'un point ou d'une portion centrale de la surface porteuse centrale. La longueur des orifices peut alors par exemple croitre avec la distance de l'orifice par rapport au point ou par rapport à la zone centrale.

Ce mode de réalisation est avantageux si le cadre horizontal accueille un contour d'appui horizontal s'étendant tout autour (à 360°) de la surface porteuse.

Le cadre peut être sensiblement rectangulaire, et être configuré pour être assemblé sur trois premiers côtés, à une portion horizontale de contour d'appui, et être configuré pour être assemblée à une paroi verticale de la pièce moulée sur un quatrième côté.

Avantageusement, les orifices présentent alors une section rectangulaire ou ovale, dont les grands axes sont orientés parallèlement aux trois premiers côtés du cadre sur chaque portion du contour d'appui longeant un des trois premiers bords du cadre

La surface verticale forme alors une ligne de référence considérée comme immobile pendant les dilatations différentielles entre pièce et cadre. Les dilatations différentielles peuvent se produire également le long de la ligne "immobile", parallèlement à celle-ci.

Selon un mode de réalisation avantageux, la pièce moulée peut être moulée en une seule matière.

On parle ici de matière au sens macroscopique, fournie comme matériau injectable ou moulable. Ladite matière peut être en matériau composite injectable.

Selon un autre mode de réalisation, la pièce moulée peut comporter sur un bord une paroi verticale intégrant de moulage, des pastilles métalliques aptes à être soudées, ainsi surmoulées, à une paroi verticale du cadre.

Selon un mode de réalisation, au moins six orifices présentent une forme oblongue de découpe, avec la même plus petite largeur, les grands axes d'au moins deux premiers orifices étant sensiblement parallèles entre eux, et les grands axes d'au moins deux deuxièmes orifices étant parallèles entre eux.

Selon un mode de réalisation, au moins six orifices peuvent présenter une même forme oblongue de découpe, avec la même plus petite largeur et la même plus grande longueur.

Selon un mode de réalisation, les orifices peuvent être tous de même forme, et orientés de manière équidistante les uns par rapport aux autres. Avantageusement, l'orientation des axes des orifices dépend cependant du lieu de l'orifice sur la pièce. On simplifie ainsi le dessin du moule de la pièce.

Selon un autre mode de réalisation, les grands diamètres des orifices sont de longueur variable, ce qui permet un meilleur maintien au niveau des orifices les plus courts.

Avantageusement, le cadre comprend au moins une portion inférieure de cadre et au moins une portion supérieure de cadre, la portion supérieure de cadre étant assemblée à la portion inférieure de cadre par une suite de points de soudure traversant la pièce moulée au niveau d'une suite d'orifices parmi les orifices ménagés sur la pièce lors du moulage de la pièce.

Selon un mode de réalisation, le diamètre des points de soudure est inférieur ou égal au plus petit diamètre de l'orifice traversé par le point de soudure.

L'invention concerne également un procédé de fabrication d'une structure de caisse de véhicule automobile, le procédé comprenant :
- la fourniture d'une première épaisseur de cadre métallique, définissant une surface d'appui horizontale autour d'une ouverture centrale du cadre
- le positionnement d'une pièce moulée sur la première épaisseur de cadre, de manière à définir une surface porteuse de type bac ou plancher à l'intérieur du cadre, en appuyant un contour d'appui de la pièce moulée sur la première épaisseur de cadre
- la fourniture d'une deuxième épaisseur de cadre métallique, superposable à la première épaisseur de cadre,
- Le positionnement de la deuxième épaisseur de cadre par-dessus -,
- le soudage de la première épaisseur de cadre avec la deuxième épaisseur de cadre en formant des points de soudure traversant l'épaisseur de la pièce moulée, à l'intérieur d'espaces délimités par les orifices,
- ladite étape étant suivie d'une étape de passage à une température supérieure à 150°C pendant une durée supérieure à 30 minutes du sous ensemble de structure de caisse .

L'invention concerne également un véhicule comprenant un sous ensemble de structure de caisse telle que décrite précédemment.

Quelques buts, caractéristiques et avantages de l'invention apparaîtront à la lecture de la description suivante, donnée uniquement à titre d'exemple non limitatif, et faite en référence aux dessins annexés, sur lesquels :
La figure 1 illustre une portion de structure de caisse automobile selon l'invention, comprenant un bac de stockage de roue de secours ;
La figure 2 est une vue de dessus d'une pièce moulée constitutive du bac de roue de secours selon l'invention;
La figure 3 est une vue schématique, en coupe de la pièce moulée de la figure 2, au niveau d'un bord d'assemblage avec le reste de la structure de caisse, selon un premier mode d'assemblage,;
La figure 4 est une vue schématique en coupe de la pièce moulée de la figure 2, au niveau d'un bord d'assemblage avec le reste de la structure de caisse, selon un deuxième mode d'assemblage;
La figure 5 est une vue schématique en perspective d'une zone d'assemblage d'une pièce moulée selon l'invention, similaire à la pièce moulée de la figure 3 ;
La figure 6 est une vue de dessus, schématique, d'une portion d'un bord d'assemblage d'une pièce moulée constitutive d'un bac de roue de secours selon l'invention.

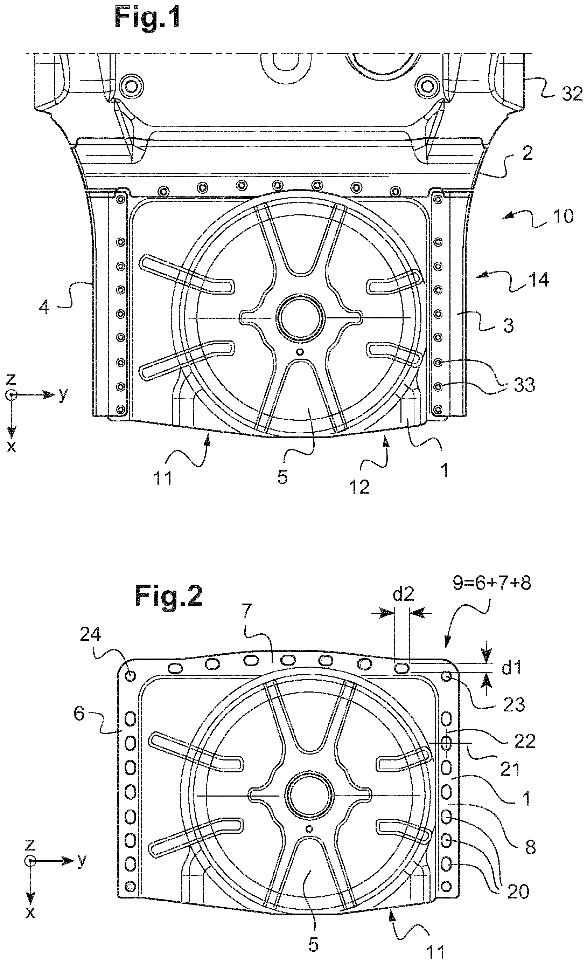

Tel qu'illustré sur la figure 1, un sous-ensemble 10 de structure de caisse automobile, définissant un bac de stockage pour roue de secours, comprend une structure formant cadre métallique 14. Le cadre métallique 14 est intégré ici à l'arrière du véhicule. Le cadre métallique 14 comprend dans l'exemple illustré, une traverse de ripage 2, s'étendant transversalement au véhicule, deux longerons 3, 4 s'étendant dans un sens longitudinal du véhicule, et comprend également, ici, une portion verticale 12 de doublure de jupe arrière s'étendant entre les deux longerons 3 et 4. Les longerons 3, 4 sont assemblés sur la traverse de ripage perpendiculairement à celle-ci. La doublure de jupe arrière s'étend sensiblement parallèlement à la traverse de ripage 2.

Sur ce cadre métallique 14, est assemblée une pièce moulée 1, définissant, à l'intérieur du cadre 14, une surface porteuse apte ici, à soutenir une roue de secours.

La pièce moulée 1 est assemblée par un contour d'appui 9 qui est horizontal, et qui accoste ici, sur trois côtés du cadre 14 perpendiculaires entre eux. La pièce moulée 1 est en outre assemblée par une portion verticale 11 de la pièce moulée, sur la doublure de jupe arrière 12.

Selon certaines variantes de réalisation, la totalité du contour d'appui 9 de la pièce moulée peut être assemblée au moyen de surfaces horizontales.

Selon d'autres modes de réalisation, un des côtés de la pièce moulée 1 peut être assemblé au niveau d'une surface verticale de la pièce moulée, comme ici sur la doublure de jupe arrière 12.

Les coefficients de dilatation de la pièce 1, notamment si elle est moulée en matière polymère, sont, le plus souvent, sensiblement plus importants que les coefficients de dilatation du cadre métallique sur lequel la pièce 1 est assemblée.

Lorsque le sous-ensemble de structure de caisse 10 est amené à monter en température, notamment lors du procédé de fabrication de la structure de caisse, les points de la pièce moulée 1 tendent à se déplacer par rapport aux points du cadre métallique initialement en regard de ces points de la pièce moulée.

Dans l'exemple illustré, les éléments de la structure de caisse 10, sont repérés dans un repère X, Y, Z lié au véhicule, l'axe X étant un axe horizontal parallèle à la direction usuelle d'avancement du véhicule, dirigé de l'avant vers l'arrière du véhicule, l'axe Y étant un axe transversal horizontal, et l'axe Z étant un axe vertical pointant vers le haut.

Dans l'exemple illustré, la portion de structure de caisse 10 comprenant la pièce moulée 1, se situe à l'arrière d'une portion 32 arrière de plancher, bordée par la traverse de ripage 2.

La traverse de ripage 2 et les longerons 3, 4 comprennent des portions de poutres en U, ouvertes vers le haut, chacune de ces portions étant refermée par une portion, sensiblement plane, de tôle métallique assemblée au niveau de points de soudure 33.

Les points de soudure 33 forment une ligne de points d'assemblage autour du cadre métallique 14.

Dans le sous-ensemble de structures de caisse 10 selon l'invention ces points de soudure 33 sont utilisées pour fixer également la pièce moulée 1 sur le cadre métallique 14.

A cette fin, la pièce 1 est munie d'un contour d'appui 9, apte à être posé par-dessus les poutres en U des longerons 3, 4, et par-dessus la poutre en U de la traverse de ripage 2, de manière à superposer le contour d'appui 9 avec un rebord horizontal de chacune des poutres en U, ledit rebord horizontal étant configuré pour recevoir par la suite les points de soudure 33.

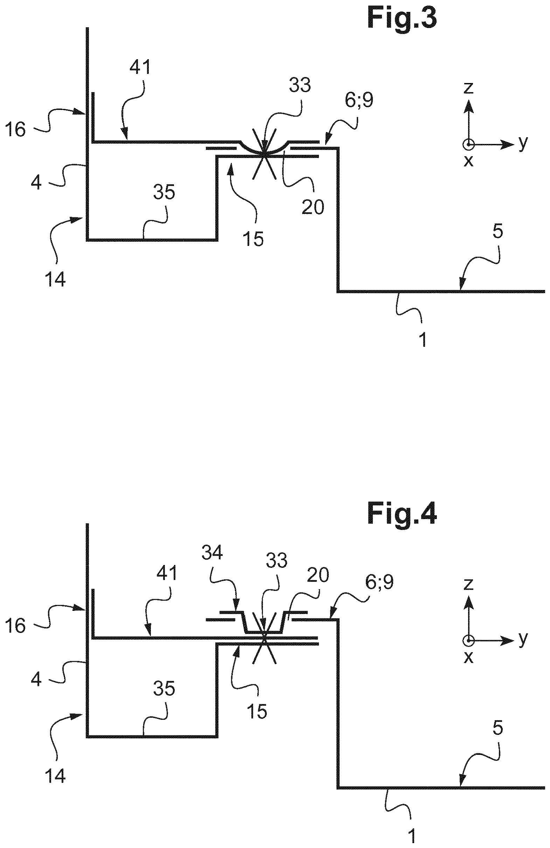

Les figures 3 et 4 montrent en coupe, des exemples de positionnement des pièces au niveau des points de soudure 33.

Dans l'exemple illustré sur la figure 3, qui montre une section de la pièce moulée 1 au niveau de son assemblage avec le longeron gauche 4, le contour d'appui 9 est traversé d'orifices d'assemblage 20, permettant de réaliser au-travers de la pièce 1, des points de soudure 33. Ces points de soudure relient, en traversant la pièce moulée 1 au niveau des orifices 20, la poutre en U référencée 35 -appartenant au longeron ou à la traverse de ripage-, et la tôle de fermeture 41, destinée à fermer le longeron ou la traverse de ripage.

Ce mode de réalisation permet de limiter le nombre de pièces à souder ensemble.

Selon un autre exemple illustré en figure 4, le contour d'appui 9 est traversé d'orifices d'assemblage 20, permettant de faire passer au-travers de la pièce 1, des points de soudure 33. La tôle de fermeture 41 est ici posée directement par-dessus le rebord horizontal 15 de la poutre en U, et le contour d'appui horizontal 9 de la pièce moulée 1 est disposé par-dessus la tôle de fermeture 41. Une coupelle ou une rondelle métallique rapportée 34, plus large que l'orifice 20, est disposée par-dessus la pièce moulée 1, de manière éventuellement à s'insérer au moins partiellement dans l'épaisseur de l'orifice 20. La coupelle rapportée 34 est configurée et placée de manière à pouvoir être soudée, au travers de l'orifice 20, à la tôle de fermeture 41 et au rebord 15 de la poutre en U.

Ce mode de réalisation peut permettre d'avoir une meilleure cohésion de soudage entre la tôle de fermeture 41 et la poutre en U. Ce mode de réalisation facilite en outre le contrôle de la position exacte de l'orifice 20 avant de réaliser la soudure, afin de réaliser une soudure ne venant pas se coller à une zone accidentellement fondue, lors du soudage, de la pièce 1. La mobilité de la pièce 1 lors des dilatations différentielles peut en être améliorée.

On retrouve sur la figure 4 de nombreux éléments communs à la figure 3, des éléments similaires étant désignés par les mêmes références.

Dans les exemples illustrés en figures 3 et 4, la tôle de fermeture, configurée pour fermer la poutre en U du longeron ou de traverse de ripage, est configurée pour pouvoir être disposée par-dessus le contour d'appui 9 de la pièce moulée, et soudée au niveau de points de soudure 33, avec la poutre en U correspondante.

Selon un mode de réalisation préféré, la tôle de fermeture, par exemple une tôle 41 fermant le longeron 4, accoste en outre sur la poutre en U avec laquelle elle est soudée au niveau des points de soudure 33, par au moins une ligne de contact 16, distante du contour d'appui 9.

Les orifices 20 sont visibles sur les figures 2 et 3, mais ne sont pas visibles sur la figure 1.

La figure 2 illustre la pièce moulée 1 isolée du sous-ensemble de structure de caisse 10 de la figure 1. On retrouve sur la figure 2 des éléments communs à la figure 1, les mêmes éléments étant désignée par les mêmes références.

Comme visible sur la figure 2, la pièce moulée 1 comprend, au centre du contour d'appui 9, une portion centrale 5. La portion 5 est ici en dénivelé par rapport au contour d'appui 9, et est de géométrie adaptée pour recevoir une roue de secours.

On peut envisager des variantes de réalisation avec une portion centrale sensiblement de niveau avec le contour d'appui 9.

La portion de surface porteuse 5 sensiblement horizontale est entourée et soutenue par un contour d'appui 9, comprenant une ou plusieurs portions d'appui sensiblement horizontales. Le contour d'appui 9 comprend ici une première portion rectiligne 6 superposée au longeron 4, une seconde portion rectiligne 7 superposée au longeron 3, et une troisième portion sensiblement rectiligne 7 superposée à la traverse de ripage 2.

### (Les longerons et la traverse de ripage ne sont pas visibles sur la figure 2)

Dans l'exemple illustré, les portions horizontales du contour d'appui 9 sont complétées par une portion verticale 11 de la pièce moulée, destinée à venir accoster sur la doublure de jupe arrière 12, également verticale.

Comme visible sur la figure 2, pièce moulée 1 est traversée au niveau du contour d'appui 9 horizontal, par une suite d'orifices d'assemblage 20.

Tout ou partie de ces orifices 20 d'assemblage, présentent une forme oblongue. L'orientation de l'orifice peut être définie par un petit axe 21 et grand axe 22, en définissant le petit axe et le grand axe de manière similaire à ceux d'une ellipse.

La forme générale de l'orifice 20 peut être sensiblement rectangulaire, ovale, elliptique, ou une autre forme géométrique comportant une portion allongée.

La forme de chacun des orifices permet de définir un petit diamètre "dl" parallèlement au petit axe de l'orifice, et un grand diamètre "d2" parallèlement au grand axe de l'orifice.

De manière préférentielle, le grand axe de chaque orifice est orienté suivant la direction dans laquelle on prévoit, au voisinage de l'orifice, de laisser se déplacer la pièce 1 par rapport aux points de soudure 33 lors de variations de température de l'assemblage.

Ces déplacement induits par la dilatation différentielle, dépendant des conditions de bord -par exemple si certaines des zones de fixation de la pièce 1 sont particulièrement rigides. Un assemblage par paroi verticale peut être considéré comme rigide, car n'autorisant pas de déplacement dans le sens horizontal.

Ces déplacements induits par la dilatation différentielle, dépendent également de la forme globale de la pièce : par exemple des reliefs de découpe de la pièce peuvent permettre d'absorber une partie des dilatation dans un plan autre que le plan du contour d'appui 9.

En fonction de ces conditions de bord et de la forme générale de la pièce moulée 1, différentes configurations peuvent être envisagées pour la géométrie des orifices 20, afin de permettre à la pièce 1 de se déplacer lors de la dilatation différentielle par rapport au cadre métallique en limitant les contraintes induites dans la pièce.

Dans l'exemple illustré, les orifices 20 situés les long des longerons présentent ainsi des géométries de découpe identiques, avec un grand axe orienté parallèlement au longeron

En effet dans l'exemple illustré en figure 2, la portion verticale d'assemblage 11 bloquant suivant l'axe X les déplacements de la pièce 1, il est avantageux de laisser une liberté de dilatation selon cet axe X le long des longerons.

Les orifices ménagés le long de la traverse de ripage 2, présentent pour leur part un grand axe orienté sensiblement parallèlement à la traverse de ripage 2.

Des orifices d'angle, ici 23, 24, situés dans des angles du contour d'appui, sont sensiblement circulaires pour limiter les déplacements des coins de la pièce moulé 1 par rapport au cadre 1.

Entre les orifices 23 et 24, les grands axes des orifices 20 superposées à la traverse de ripage 2, sont orientées suivant l'axe Y de manière à laisser cette portion 7 du bord d'appui de la pièce 1, se déformer suivant le sens transversal au véhicule.

Afin de laisser, au niveau des mêmes orifices de la portion 7, un peu de liberté de déformation suivant l'axe X, les valeurs des petit diamètre "dl" des orifices de la portion 7, sont plus larges que les petits diamètres "dl" des orifices des portions 6 et 8 du bord d'appui, superposées au longerons.

Les orifices des portions 6 et 8 sont juste dimensionnés pour permettre d'y déplacer les points de soudure 33. Les orifices de la portion 7 doivent également permettre un déplacement des soudures perpendiculaires au grand axe de l'orifice.

D'autres configurations de trous oblongs sont envisageables, en fonction des conditions de bord et de la géométrie de la pièce moulée 1.

On peut par exemple envisager des orifices dont les grands axes sont orientés radialement à partir d'un point ou d'une zone considérée comme "immobile" lors des dilatations différentielles. Cette zone peut être une région centrale de la pièce 1, par exemple si la pièce est assemblée sur tout son pourtour par un contour d'appui horizontal, le contour d'appui horizontal permettant de laisser un jeu de dilatation 'centrifuge' à la pièce.

Dans le cas où l'un des bord de la pièce est bloqué en déplacement, comme dans le mode de réalisation de la figure 2, on peut par exemple envisager d'orienter les grands axes des orifices perpendiculairement à la paroi bloquée, et dans certains modes de réalisation, écarter la direction de ces grands axes de part et d'autre d'une ligne médiane de la pièce au fur et à mesure que l'on s'éloigne de la paroi bloquée.

Si on parvient à optimiser l'orientation du grand axe de chaque orifice, on peut envisager de limiter les valeurs du petit diamètre "d1" de l'orifice à une valeur minimale permettant de passer le point de soudure au travers de la pièce. Dans cette éventualité tous les orifices 20 peuvent alors présenter une valeur de petit diamètre dl sensiblement identique

Dans certains modes de réalisation, pour tenir compte du fait que le déplacement lié à la dilatation différentielle augmente avec la distance du point de la pièce par rapport aux zones bloquées de l'assemblage, on peut alors envisager d'augmenter la valeur du grand diamètre "d2" pour les orifices d'assemblages 20 les plus distants des zones 11 de la pièce bloquée en déformation.

La figure 3 illustre une vue schématique, en coupe, d'une zone d'assemblage de la pièce 1 au niveau d'un des orifices 20 ménagés au travers de la pièce. On retrouve sur la figure 3 des éléments communs aux figures précédentes, les mêmes éléments étant désignés par les mêmes références.

Tel que visible sur la figure 3, une portion du cadre métallique 14, ici le longeron 4, comprend une portion 15 d'appui horizontal, sur laquelle vient s'appuyer une portion rectiligne 6 sensiblement horizontale du contour d'appui 9 de la pièce moulée.

Le longeron 4 est fermé par une tôle de fermeture 41 présentant un relief apte à être inséré dans l'orifice 20 de manière à ce que la proximité entre la portion 15 et la tôle de fermeture 41 permette de créer un point de soudure 33 traversant l'orifice 20.

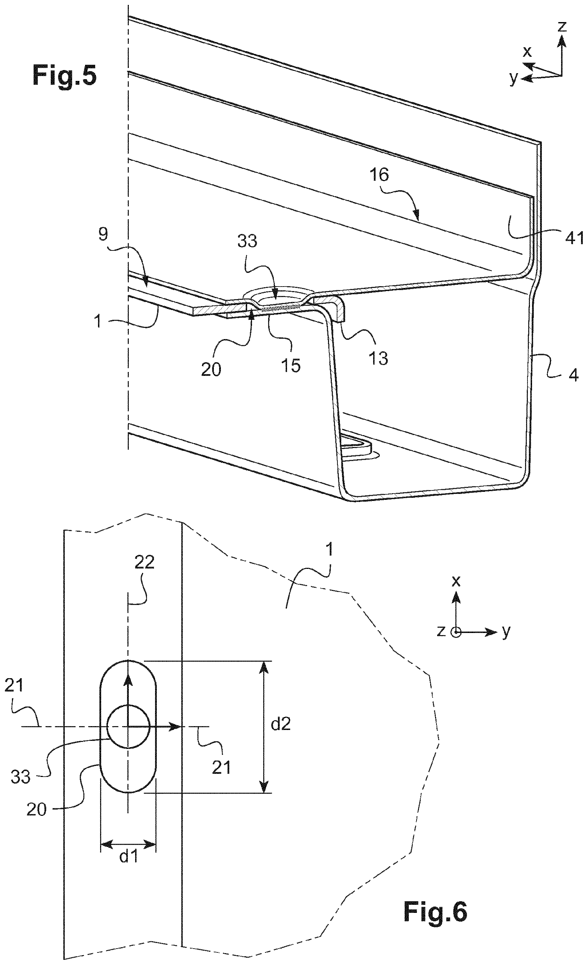

La figure 5 illustre la même zone d'assemblage en perspective, en écorché partiel. On retrouve sur la figure 5 des éléments communs aux figures précédentes, les mêmes éléments étant désignés par les mêmes références.

On note en particulier sur la figure 5, un rebord du positionnement 13 du contour d'appui 9, définissant un relief permettant de positionner les orifices 20 de manière adéquate par rapport au longeron 4, pour que des reliefs destinée au soudage et ménagés sur la tôle de fermeture 41 (ou ménagés sur la portion 15) viennent se positionner de manière adéquate face aux orifices 20.

La figure 6 est une illustration schématique en vue de dessus, de la pièce moulée 1 au niveau d'un des orifices d'assemblage 20.

On retrouve sur la figure 6 des éléments communs aux figures précédentes, les mêmes éléments étant désignés par les mêmes références.

Ici l'orifice 20 présente une forme sensiblement ovale, de manière à permettre le déplacement d'un point de soudure 33 -considéré ici comme circulaire- suivant une direction X, sur toute la longueur de l'orifice 20.

On note également que le petit diamètre "dl" est dimensionnée de manière à laisser un léger jeu entre la zone métallique du point soudé d'assemblage 33, et les bords de l'orifice 20, ceci afin de faciliter au mieux les déformations de la pièce 1 lors des dilatations différentielles.

L'invention ne se limite pas aux exemples de réalisation décrits, et peut se décliner en de nombreuses variantes.

Les variations dimensionnelles et les variations d'orientation peuvent être adaptées en fonction de la géométrie du cadre et de la géométrie de la pièce. On peut ménager des trous oblongs permettant un déplacement des points de soudure 33 en arc de cercle au lieu d'une trajectoire rectiligne des points de soudure.

On peut dans certains modes de réalisation, réaliser des orifices d'assemblage qui sont circulaires, de diamètre suffisant pour permettre une déformation différentielle de la pièce juste nécessaire pour ne pas dépasser certaines contraintes internes de la pièce.

Les modes d'assemblage entre les deux portions métalliques situées en-dessous et au-dessus de l'orifice d'assemblage 20 de la pièce moulée peuvent être autres que des points de soudure.

On peut par exemple envisager de faire passer au travers de la pièce moulée des rivets, des vis ou d'autres éléments d'assemblage entre pièces métalliques.

Le procédé d'assemblage entre support plastique et contour métallique permet de tirer profit du procédé d'assemblage du cadre métallique lui-même, pour fixer conjointement la pièce plastique sans nécessiter un apport supplémentaire de colle ou d'éléments d'assemblage supplémentaires.

Le sous-ensemble de structure de caisse selon l'invention permet d'obtenir un sous-ensemble allégé par rapport aux variantes métalliques. La structure de caisse obtenue reste compatible avec des chaînes de montage imposant des passages à haute température.

## Revendications

1. Sous ensemble (10) de structure de caisse automobile, comprenant:
- une portion métallique de structure de caisse formant cadre (14),
- une pièce moulée (1) définissant une surface porteuse (5) de type bac ou plancher, configurée pour être assemblée sur le cadre (14) de manière à être entourée par le cadre (14), la pièce moulée (1) comprenant :
- une surface centrale porteuse (5),
- un contour d'appui (9) sensiblement plan entourant la surface centrale porteuse (5), de niveau avec la surface centrale porteuse ou au dessus de la surface centrale porteuse,
**caractérisé en ce que** le contour d'appui (9) de la pièce moulée (1), est traversé par une suite d'orifices d'assemblage (20) ménagé lors du moulage de la pièce, les orifices d'assemblage (20) traversant le contour d'appui (9) dans son épaisseur (Z), les orifices d'assemblage (20) étant de forme oblongue dans le plan du contour d'appui (9), et étant dimensionnés de manière qu'une portion centrale de chaque orifice (20) est de largeur suffisante (d1) pour assembler entre elles par soudage, deux tôles (15, 41) du cadre (14), superposées entre elles et superposées au contour d'appui (9)..

2. Sous ensemble de structure de caisse (10) selon la revendication 1, dans lequel chacun desdits orifices (20) présente de moulage, une largeur maximale (d1) correspondant à un plus petit diamètre de l'orifice (20), orientée suivant une premier axe (21) de l'orifice, et une longueur maximale correspondant à un plus grand diamètre (d2) de l'orifice, orientée selon une direction (22) perpendiculaire au premier axe, les plus petits diamètres (d1) des orifices étant sensiblement égaux entre eux.

3. Sous ensemble de structure de caisse selon l'une des revendications 1 ou 2, dans lequel les orifices (20) présentent un plus grand diamètre (d2), qui varie de manière monotone d'un orifice à l'orifice suivant, sur au moins trois orifices successifs du contour d'appui (9).

4. Sous ensemble de structure de caisse selon l'une des revendications 1 à 3, dans lequel les orifices (20) présentent une section rectangulaire ou ovale, dont les grands axes (22) sont sensiblement parallèles chacun à un bord libre du contour d'appui (9), le plus proche de l'orifice (20).

5. Sous ensemble de structure de caisse selon l'une des revendications 1 à 3, dans lequel les orifices (20) présentent une section rectangulaire ou ovale, dont les grands axes (22) sont orientés de manière sensiblement radiale à partir d'un point ou d'une portion centrale de la surface centrale porteuse (5).

6. Sous ensemble de structure de caisse l'une des revendications 1 à 3, dans lequel le cadre (14) est sensiblement rectangulaire, le cadre (14) est configuré pour être assemblé sur trois premiers côtés du cadre, à une portion horizontale (6, 7, 8) du contour d'appui (9), et le cadre (14) est configuré pour être assemblée à une paroi verticale (11) de la pièce moulée sur un quatrième côté (12).

7. Sous ensemble de structure de caisse selon l'une quelconque des revendications précédentes, dans lequel le cadre comprend au moins une portion inférieure de cadre (15) et au moins une portion supérieure de cadre (41), la portion supérieure de cadre étant assemblée à la portion inférieure de cadre par une suite de points de soudure (33) traversant la pièce moulée au niveau d'une suite d'orifices (20) parmi les orifices ménagés sur la pièce lors du moulage de la pièce (1).

8. Sous ensemble de structure de caisse selon les revendications 2 et 7 combinées, dans lequel le diamètre des points de soudure (33) est inférieur ou égal au plus petit diamètre (d1) de l'orifice traversé par le point de soudure(33).

9. Procédé de fabrication d'une structure de caisse de véhicule automobile, comprenant :
- la fourniture d'une première épaisseur de cadre métallique (2, 3, 4), définissant une surface d'appui horizontale autour d'une ouverture centrale du cadre,
- la fourniture d'une pièce moulée (1) comportant une surface porteuse centrale (5), entourée par un contour d'appui (9) qui est traversé, de moulage, par des orifices d'assemblage (20),
- le positionnement de la pièce moulée (1) sur la première épaisseur de cadre, de manière à placer la surface porteuse (5) de type bac ou plancher à l'intérieur du cadre (14), en appuyant le contour d'appui (9) de la pièce moulée (1) par dessus la première épaisseur de cadre,
- la fourniture d'une deuxième épaisseur de cadre métallique (41), superposable à la première épaisseur de cadre,
- le positionnement de la deuxième épaisseur (41) de cadre par-dessus la première épaisseur de cadre,
- le soudage de la première épaisseur de cadre avec la deuxième épaisseur de cadre en formant des points de soudure (33) traversant l'épaisseur de la pièce moulée, à l'intérieur d'espaces délimités par les orifices (20),
- ladite étape de soudage étant suivie d'une étape de passage du sous ensemble de structure de caisse à une température supérieure à 150°C pendant une durée supérieure à 30 minutes.

10. Véhicule comprenant un sous ensemble de structure de caisse (10) selon l'une quelconque des revendications 1 à 8.

## Patentansprüche

1. Unterbaugruppe (10) einer Kraftfahrzeugkarosseriestruktur, umfassend:
- einen Karosseriestruktur-Metallabschnitt, der einen Rahmen (14) ausbildet,
- einen Formteil (1), der eine wannen- oder bodenartige Tragfläche (5) ausbildet und konfiguriert ist, um so am Rahmen (14) montiert zu werden, dass er vom Rahmen (14) umgeben ist, wobei der Formteil (1) Folgendes umfasst:
- eine zentrale Tragfläche (5),
- eine im Wesentlichen ebene Auflagekontur (9), die die zentrale Tragfläche (5) umgibt und bündig mit der zentralen Tragfläche ist oder die zentrale Tragfläche überragt,
**dadurch gekennzeichnet, dass** die Auflagekontur (9) des Formteils (1) von einer Reihe von Montageöffnungen (20) durchdrungen wird, die beim Formen des Teils vorgesehen werden, wobei die Montageöffnungen (20) die Auflagekontur (9) in ihrer Dicke (Z) durchdringen, wobei die Montageöffnungen (20) in der Ebene der Auflagekontur (9) eine längliche Form aufweisen und so dimensioniert sind, dass ein mittlerer Abschnitt jeder Öffnung (20) eine ausreichende Breite (d1) aufweist, um zwei übereinanderliegende und auf der Auflagekontur (9) liegende Bleche (15, 41) des Rahmens (14) durch Schweißen zusammenzufügen.

2. Karosseriestruktur-Unterbaugruppe (10) nach Anspruch 1, wobei jede der beim Formen vorgesehenen Öffnungen (20) eine maximale Breite (d1) aufweist, die einem kleinsten Durchmesser der Öffnung (20) entspricht und entlang einer ersten Achse (21) der Öffnung ausgerichtet ist, und eine maximale Länge aufweist, die einem größten Durchmesser (d2) der Öffnung entspricht und entlang einer zur ersten Achse senkrechten Richtung (22) ausgerichtet ist, wobei die kleinsten Durchmesser (d1) der Öffnungen im Wesentlichen miteinander übereinstimmen.

3. Karosseriestruktur-Unterbaugruppe nach einem der Ansprüche 1 oder 2, wobei die Öffnungen (20) in mindestens drei aufeinanderfolgenden Öffnungen der Auflagekontur (9) einen größten Durchmesser (d2) aufweisen, der sich von Öffnung zu Öffnung monoton ändert.

4. Karosseriestruktur-Unterbaugruppe nach einem der Ansprüche 1 bis 3, wobei die Öffnungen (20) einen rechteckigen oder ovalen Querschnitt aufweisen, dessen Hauptachsen (22) jeweils im Wesentlichen parallel zu einer freien, der Öffnung (20) nächstgelegenen Kante der Auflagekontur (9) verlaufen.

5. Karosseriestruktur-Unterbaugruppe nach einem der Ansprüche 1 bis 3, wobei die Öffnungen (20) einen rechteckigen oder ovalen Querschnitt aufweisen, dessen Hauptachsen (22) im Wesentlichen radial von einem zentralen Punkt oder Abschnitt der zentralen Tragfläche (5) ausgerichtet sind.

6. Karosseriestruktur-Unterbaugruppe nach einem der Ansprüche 1 bis 3, wobei der Rahmen (14) im Wesentlichen rechteckig ist, wobei der Rahmen (14) so konfiguriert ist, dass er auf drei ersten Rahmenseiten mit einem horizontalen Abschnitt (6, 7, 8) der Auflagekontur (9) verbunden ist, und wobei der Rahmen (14) so konfiguriert ist, dass er auf einer vierten Seite (12) mit einer vertikalen Wand (11) des Formteils verbunden ist.

7. Karosseriestruktur-Unterbaugruppe nach einem der vorangehenden Ansprüche, wobei der Rahmen zumindest einen unteren Rahmenabschnitt (15) und zumindest einen oberen Rahmenabschnitt (41) umfasst, wobei der obere Rahmenabschnitt mit dem unteren Rahmenabschnitt durch eine Reihe von Schweißpunkten (33) verbunden ist, die den Formteil im Bereich einer Reihe von Öffnungen (20) unter den beim Formen des Teils (1) am Teil vorgesehenen Öffnungen durchdringen.

8. Karosseriestruktur-Unterbaugruppe nach Anspruch 2 und 7 in Kombination, wobei der Durchmesser der Schweißpunkte (33) kleiner als oder so groß wie der kleinste Durchmesser (d1) der Öffnung ist, durch die der Schweißpunkt (33) verläuft.

9. Verfahren zur Herstellung einer Kraftfahrzeugkarosseriestruktur, umfassend:
- Bereitstellen einer ersten Metallrahmendicke (2, 3, 4), die eine horizontale Auflagefläche um eine zentrale Öffnung des Rahmens bildet,
- Bereitstellen eines Formteils (1), das eine zentrale Tragfläche (5) aufweist, die von einer Auflagekontur (9) umgeben ist, die beim Formen von Montageöffnungen (20) durchdrungen wird,
- Positionieren des Formteils (1) auf der ersten Rahmendicke, so dass die schalen- oder bodenartige Tragfläche (5) innerhalb des Rahmens (14) angeordnet ist, indem die Auflagekontur (9) des Formteils (1) über die erste Rahmendicke gedrückt wird,
- Bereitstellen einer zweiten Metallrahmendicke (41), die die erste Rahmendicke überlagern kann,
- Positionieren der zweiten Rahmendicke (41) über der ersten Rahmendicke,
- Verschweißen der ersten Rahmendicke mit der zweiten Rahmendicke durch Ausbilden von Schweißpunkten (33), die die Dicke des Formteils innerhalb von durch die Öffnungen (20) begrenzten Räumen durchdringen,
- wobei dem Schritt des Verschweißens ein Schritt folgt, bei dem die Karosseriestruktur-Unterbaugruppe über einen Zeitraum von mehr als 30 Minuten einer Temperatur von mehr als 150°C ausgesetzt wird.

10. Fahrzeug, umfassend eine Karosseriestruktur-Unterbaugruppe (10) nach einem der Ansprüche 1 bis 8.

## Claims

1. Motor-vehicle body-structure subassembly (10), comprising:
- a metal body-structure portion forming a frame (14),
- a molded part (1) that defines a bearing surface (5) of the tray or floor type and is configured to be fitted on the frame (14) so as to be surrounded by the frame (14), the molded part (1) comprising:
- a central bearing surface (5),
- a substantially flat supporting contour (9) surrounding the central bearing surface (5), level with the central bearing surface or above the central bearing surface, **characterized in that** the supporting contour (9) of the molded part (1) is passed through by a series of fitting orifices (20) formed during the molding of the part, the fitting orifices (20) passing right through the thickness (Z) of the supporting contour (9), the fitting orifices (20) having an elongate shape in the plane of the supporting contour (9) and being dimensioned such that a central portion of each orifice (20) has a sufficient width (d1) for welding together two sheets (15, 41) of the frame (14) that are mutually superposed and superposed on the supporting contour (9).

2. Body-structure subassembly (10) according to Claim 1, wherein each of said orifices (20) has, as a result of molding, a maximum width (d1) that corresponds to a smallest diameter of the orifice (20) and is oriented along a first axis (21) of the orifice, and a maximum length that corresponds to a largest diameter (d2) of the orifice and is oriented in a direction (22) perpendicular to the first axis, the smallest diameters (d1) of the orifices being substantially equal to one another.

3. Body-structure subassembly according to either of Claims 1 and 2, wherein the orifices (20) have a largest diameter (d2) that varies monotonically from one orifice to the next, over at least three successive orifices of the supporting contour (9).

4. Body-structure subassembly according to one of Claims 1 to 3, wherein the orifices (20) have a rectangular or oval section, the major axes (22) of which are each substantially parallel to a free edge of the supporting contour (9) that is closest to the orifice (20) .

5. Body-structure subassembly according to one of Claims 1 to 3, wherein the orifices (20) have a rectangular or oval section, the major axes (22) of which are oriented substantially radially from a point or a central portion of the central bearing surface (5).

6. Body-structure subassembly according to one of Claims 1 to 3, wherein the frame (14) is substantially rectangular, the frame (14) is configured to be fitted, on three first sides of the frame, to a horizontal portion (6, 7, 8) of the supporting contour (9), and the frame (14) is configured to be fitted to a vertical wall (11) of the molded part on a fourth side (12).

7. Body-structure subassembly according to any one of the preceding claims, wherein the frame comprises at least one lower frame portion (15) and at least one upper frame portion (41), the upper frame portion being fitted to the lower frame portion by a series of welding spots (33) that pass through the molded part at a series of orifices (20) selected from the orifices formed in the part during the molding of the part (1).

8. Body-structure subassembly according to Claims 2 and 7 combined, wherein the diameter of the welding spots (33) is less than or equal to the smallest diameter (d1) of the orifice through which the welding spot (33) passes.

9. Method for manufacturing a motor-vehicle body structure, comprising:
- the provision of a first metal frame thickness (2, 3, 4), defining a horizontal supporting surface around a central opening of the frame,
- the provision of a molded part (1) having a central bearing surface (5) surrounded by a supporting surface (9) which is passed through, as a result of molding, by fitting orifices (20),
- the positioning of the molded part (1) on the first frame thickness so as to place the bearing surface (5) of the tray or floor type inside the frame (14), by pressing the supporting contour (9) of the molded part (1) on top of the first frame thickness,
- the provision of a second metal frame thickness (41) that is able to be superposed on the first frame thickness,
- the positioning of the second frame thickness (41) on top of the first frame thickness,
- the welding of the first frame thickness to the second frame thickness, forming welding spots (33) that pass through the thickness of the molded part, inside spaces delimited by the orifices (20),
- said welding step being following by a step of bringing the body-structure subassembly to a temperature greater than 150°C for a time greater than 30 minutes.

10. Vehicle comprising a body-structure subassembly (10) according to any one of Claims 1 to 8.
